# EUROPEAN PATENT APPLICATION

(11) **EP 3 660 633 A1**
(43) Date of publication of application: **03.06.2020**
(21) Application number: 19382659.1
(22) Date of filing: 31.07.2019
(51) Int. Cl.: G06F 3/01, G06F 1/16

(54) **HAND-WORN DATA-INPUT DEVICE**

(71) Applicant: Taurum Technologies SL, 28035 Madrid (ES)
(72) Inventor: SÁENZ LÖBSACK, DANIEL, 28035 MADRID (ES)
(74) Representative: Hernandez Lehmann, Aurelio

(57) **Abstract**

The present invention relates to a single-hand wearable device to input different sorts of data into electronic appliances or computing devices, fundamentally by means of interpreting, via capacitive sensing or direct electrical-current detection, different discrete or continuous touch, approximation or pressure actions that take place between the thumb instrumented with parts of the claimed device and, either the skin or nails of the rest of the fingers of the same hand, or other parts of the claimed device worn on the fingers and/or on the interdigital areas of the same hand.

## Description

### BACKGROUND

### Field of Invention

The present invention relates to a data-input device, more specifically to a single-hand wearable device to enter different sorts of data into client electronic or computing devices, fundamentally by means of interpreting, through capacitive sensing technology, different discrete or continuous touch, approximation or pressure actions that take place between the thumb instrumented with parts of the claimed device and, either the skin or nails of the rest of the fingers of the same hand, or other parts of the claimed device worn on the fingers and/or on the interdigital areas of the same hand.

The device could potentially replace/integrate a considerable number of current input interfacing devices (keyboards, mouse, keypads, touchscreens, etc.) and provide miscellaneous significant benefits such as: improved wearability and portability (ease of use, minimal volume, compactness...), wide richness of inputs, freedom of one-hand and eyes-free interactions (suitability for sight-limited and one-handed users), non-affection by occlusions or light conditions, instrumental simplification (integration of different interfacing devices into a single one, potential elimination of on-screen keyboards), unique user customization (use as biometrical personal security access system), etc.

### Prior Art

Some new wearable data-input solutions have attempted to overcome the drawbacks of current complex and cumbersome widely-used data interfacing devices like keyboards, mice and touchscreens; however, they have succeeded only partially, insufficiently or, in practice, inconveniently. As a matter of fact, a majority of those new solutions imply some new disadvantages such as those related to annulment of bear-skin tactile capacities, wearing discomfort, sense of bulkiness, complexity of use, operating limitations (e.g. affection by occlusions), poor richness of interaction (e.g. limited range of chords), unreliability of readings, restrictions in environmental factors, or dependence of additional external elements. Following there are some examples of those unsuccessful or only partially successful inventions:

US20120139708 discloses a one- or two-hands device to track finger and hand gestures fundamentally based on RFID technology, wherein signals transmitted are in a range of 700-1000MHz, wherein signal receiving units are passive RFID tags which are attached via rings or stripes to the distal segments of the fingers, and wherein the signal transmitting unit is an RFID reader attached to other parts of the body via garments such as a belt or a sleeve.

WO2009024971 discloses a one-finger ring-type user-input device fundamentally based on mechanical sensing technology, wherein user actions and gestures are identified via mechanical sensing of relative rotations and positions between stationary and rotatable sections comprised within the device.

US2011187637 discloses a one-hand tactile input device fundamentally based on capacitive sensing technology, wherein signal transmitting units are on fingers 2-5 and wherein signal receiving units are also on fingers 2-5 and are tactile capacitance sensors attached to ring-shaped elements worn on distal segments of the fingers.

US7109970B1 discloses a data-input device using a combination of voice commands and finger movements, using a plurality of finger-shaped sleeves that have embedded at least one contact-sensitive element and a microphone, wherein all receiving units of the contact-sensitive elements are exterior.

US6380923B1 discloses a wearable data-input device fundamentally based on shock sensing technology, wherein user actions are executed via strikes of the fingers on a physical surface, and wherein sensors are shock sensors such as accelerometers and are supported on ring-shaped elements worn on all fingers.

US20120319940 discloses a two-hands multi-finger data-input device fundamentally based on acceleration sensing technology, wherein sensors are attached to ring-shaped elements wearable on the proximal segments of the fingers.

US8743052B1 and US20150185852A1 disclose ring-type thumb-worn data-input devices fundamentally based on acceleration sensing technology (not on capacitive sensing technology), wherein the main sensor is just one accelerometer attached to the user's thumb.

US20100156783 discloses a one-hand data-input device supported by a partial hand-covering garment which is fundamentally based on surface-contact sensing technology. Similarly, US7839383B2 discloses a partial-glove type device that does not cover all fingers.

US20040263473 discloses a one-hand data-input device which detects motions fundamentally by means of photography and image-recognition technology, wherein the device comprises a bracelet with a camera and finger-worn ring-shaped elements including motion sensors.

US20070132722 and US6141643A disclose one-hand data-input devices that are fully embedded within a glove-type garment covering the whole hand.

Many novel hand-based systems to input data, based or not on the mentioned patents, have also been presented through a variety of scientific publications. However, none of them has proved to be a solid, comfortable and non-occlusive one-hand-wearable data-input solution. Following there are some examples of those disclosures and their basic drawbacks:
- 'SkinTrack', 'Abracadabra', 'SkinPut', 'iSkin', 'Omnitouch' and 'HoverFlow' are conceived not for one, but for two hands;
- 'Kitty', 'DigiTouch' and 'FJG Wearable Keypad' are one-hand wearables but based on a glove that occludes the majority of the skin of the hand;
- 'LightRing', 'SmartFinger', 'CyclopsRing', 'PickRing', 'PinchWatch', 'Fingerlnput' and 'TypingRing' are one-hand/wrist not glove-based wearables, but quite limited in their functionality due to using only one ring or wrist band and/or due to being fundamentally based on sensing of user's input gestures via infrared proximity/depth sensors, cameras, gyroscopes or accelerometers, and/or due to needing additional elements such as external surfaces or not hand/wrist-worn components.

In contrast with the referred state of the art, by means of the hereby presented invention, it should be possible to overcome not only many of the general drawbacks of current widely-used interfacing systems, but also many of the disadvantages associated to new state-of-the-art wearable data-input systems and methods. Furthermore, this invention could potentially imply a revolutionary technological contribution of value to thousands of millions of users as it could significantly improve the simplicity, speed, and freedom of maneuverability with which those users interact with their personal electronic devices on a daily basis.

### Object of the invention

In view of the foregoing prior art, an object of the present invention is to provide an improved device for human-computer interaction through hand motion.

A further object of the invention is to provide a device adapted for use by a single hand of the user.

A further object of the invention is to provide a device fundamentally based on contact (touch/approximation) sensing technologies.

A further object of the invention is to provide a device conceived to detect and process user-input gestures that involve physical contacts between the thumb and the fingers of the same hand, all of them minimally instrumented.

A further object of the invention is to provide a device which is fundamentally based on capacitive sensing technologies.

### SUMMARY OF THE INVENTION

At least part of the above objects is solved by a device according to claim 1. Advantageous embodiments and further aspects of the invention are subject of the dependent claims.

In order to facilitate summarized and detailed descriptions of the invention, a few assumptions are made in the following description:
- the device is by default worn on a user's right hand and in its operating position;
- 'wearing' of device elements should be understood as synonym of 'carrying' in a broad sense, thus including also for example carrying elements as skin- or nail- implanted components;
- user's static or dynamic contact actions refer not only to physical touching interactions but also to almost-touching connecting interactions;
- capacitive sensing technology is not limited to detecting and measuring touching actions but also to approximating actions; and
- besides capacitive sensing technology, also simple electrical-current detection technology is applied to the case of direct touches between transmitting and receiving units.

The solution involves, in a first embodiment, a data-input device for entering inputs of data into a client electronic or computing device, the data-input device configured to be worn on only one hand, namely on the 1st finger or thumb and at least on one of the fingers 2^{nd}, 3^{rd}, 4^{th} and 5^{th} of the hand or on one of the interdigital areas (interdigits) of the hand.

The data-inputs for the client device result from identifying and interpreting input gestures of the user's hand instrumented with the data-input device, the majority of them being interactions between fingers of the same hand. These user-input gestures, singly or in combination, fundamentally comprise discrete static hand/fingers positions (chords) and continuous-contact dynamic actions, most of them taking place between the instrumented thumb and fingers/interdigits or elements of the data-input device worn on them. Approximating actions and other user gestures are also possible.

Reading and interpreting user-input gestures is achieved via capacitive sensing or direct electrical-current detection using electromagnetic signals transmitted by a transmitting unit and received:
- by internal receiving units configured to process electromagnetic signals that flow through the human body tissue and that are generated by direct contact between a transmitting unit and skin or nail of the user; and/or
- by external receiving units configured to process electromagnetic signals that flow via direct contact between a transmitting unit and said external receiving units;

In a first embodiment, the data-input comprises:
- at least one energy unit to generate the power needed to create and transmit electromagnetic signals used by the data-input device;
- at least one transmitting unit for transmitting electromagnetic-signals worn on fingers 1-5,
- at least one internal receiving unit for receiving electromagnetic-signals worn on fingers 2-5 and/or interdigits 1-4 of the hand;
- at least one processing unit for scanning, cleaning, processing, transforming and storing electromagnetic signals and data derived from them to generate the data-inputs to be sent to a client device;
- at least one energy connection unit for conveying (wireless or cabled) power from energy units to transmitting units;
- at least one signals/data connection unit for conveying (wireless or cabled) signals received or data derived from them, from receiving units to processing units;

The data-input device may further comprise a variety of optional auxiliary components.

The majority of transmitting units are configured to be placed at/by approximately always-the-same fixed spots/regions of the hand.

Each transmitting unit further comprises:
- at least one outwards-oriented transmitting electrode with electromagnetic-signals transmitting plate(s) configured not to be in direct contact with the human body tissue of the finger on which the said transmitting unit is worn (transmitting finger),
- at least one element with insulating properties (insulating component) placed between the electrode plate(s) and the human body tissue of the transmitting finger,
- fixation means to fix and support the transmitting unit and assure each transmitting unit is removably attached to the transmitting finger;

In a preferred embodiment, transmitting units worn on a same finger are more than one in number and a majority of them emit electromagnetic signals at different frequencies and/or with different characteristics with the purposes of enabling simultaneous multi-channeled communications and of facilitating unique identification of a transmitting unit by analyzing its electromagnetic signals.

When one/several transmitting unit(s) is/are worn on a same finger, said transmitting unit(s) can be organized in a so-called transmitting-set and can be supported and attached to said finger by means of a single removable transmitting-set support, this is, a supporting component that integrates all functions of the supporting and insulating components of said transmitting unit(s). In a further embodiment, the data-input device further comprises one or more further receiving unit(s) for receiving electromagnetic-signals, worn on any of fingers 2-5.

Receiving units can be internal or external receiving units and the majority of them are configured to be placed at/by approximately always-the-same fixed spots/regions of the hand.

Internal receiving units are configured to process electromagnetic signals that are received through the human body tissue and that were generated by direct contact between a transmitting unit and skin or nail of the hand of the user. Each internal receiving unit comprises a variety of inwards-oriented receiving electrodes (with electromagnetic-signals receiving plates configured to be in direct contact with the supporting human body tissue) and a variety of insulating and supporting components. Internal receiving units are configured to be worn on proximal segments of fingers or interdigital areas. The data-input device comprises at least one internal receiving unit.

External receiving units are those configured to process electromagnetic signals received via a direct contact (a touching or approximating action) between a transmitting unit and said external receiving units. Each external receiving unit comprises a variety of outwards-oriented receiving electrodes and a variety of insulating and supporting components.

Receiving units can be organized in so-called receiving sets, wherein one or more receiving units of a same receiving set are supported and attached to the hand by means of a single receiving-set support, this is, a single component that is part of the receiving-set and that integrates all functions of supporting and insulating components of said receiving units of same receiving set.

Furthermore, in an exemplary embodiment, a transmitting-set support presents a shape fundamentally composed by a hood-like element and said transmitting-set support is configured be worn on the finger fully/partially covering or wrapping its fingertip and/or other parts of its skin surface.

In another exemplary embodiment, a transmitting-set support presents a shape fundamentally composed by a ring-like element and is configured to be worn on the finger partially covering or occluding its skin surface. In another version of this alternative embodiment, the transmitting-set support is a hybrid combination of a ring-based and a hood-based transmitting-set support.

In another exemplary embodiment, a transmitting-set support is easily attachable/detachable to/from a finger by means of an attachment mechanism or the like that allows its easy engagement/disengagement with/from a small auxiliary component permanently attached to the fingernail of said finger.

In another embodiment, a transmitting-set support consists in an artificial nail complementing, extending or replacing the user's fingernail and integrating the at least one transmitting unit.

In a further embodiment, a transmitting-set support consists in an implant of at least one transmitting unit inside the human body tissue of the user's fingertip, leaving outwards-oriented electrodes of said transmitting unit(s) facing to the outside and sticking out of the skin.

Furthermore, in a preferred embodiment, at least one receiving set is worn on a finger and its receiving-set support presents a shape fundamentally composed by a ring-like element.

In another version of the prior preferred embodiment, receiving-set supports can present adjustment components/adaptations to allow fast, easy and precise rotational and/or translational adjusting of supported receiving units into their always-the-same optimal wearing/operating positions.

In a further embodiment, at least one receiving set is worn on an interdigital area and/or on one or two of its two adjacent fingers and its receiving-set support presents a shape that comprises a combination of a hook-like shape and two not-fully circled ring-like shapes.

In another version of the prior embodiment, the receiving-set support comprises a movable joint to allow articulated connection between two parts of the receiving-set support.

In another version of the prior embodiment, the receiving-set support comprises a movable joint to allow articulated connection between two parts of the receiving-set support. In order to improve wearability and to facilitate adequate contact of the supported internal receiving units with the human body tissue of the fingers, different configurations may be considered to induce separation and/or avoid approximation of the two connected parts of the receiving-set support from each other, whilst keeping them connected via the movable joint, for example via specific shapes and/or materials of the receiving-set support and/or via additional simple pressure-exerting mechanisms like spring-mechanisms or the like.

In a further preferred embodiment at least one receiving set comprises a sensor-like component that can detect contacts between said receiving set and a finger adjacent to fingers associated to said receiving set, or contacts between said receiving set and another receiving set worn on fingers adjacent to fingers associated to said receiving set, or contacts between parts of said receiving set that are worn on different fingers;

Identification of receiving-set contacts by said receiving set is done by detecting simple contact between existing or auxiliary elements of the data-input device that are attached to a first and a second adjacent receiving-set supports and wherein said elements are configured to be placed facing each other, one by the ulnar side of a finger to which the first receiving-set is associated, and the other one by the radial side of the nearest adjacent finger to which the second receiving set is associated.

In further possible embodiments, receiving-set supports can be joined to each other by means of bridging elements with the purposes of facilitating handling of the receiving sets and/or of reducing the number and length of signals/data connection units.

In further preferred embodiments, external receiving units are configured to be placed by the volar and/or radial side of proximal segments of the fingers. And in still further preferred embodiments, external receiving units worn on a same finger are two in number: one configured to be worn by the volar side of the proximal segment of said finger, and the other one configured to be worn by the radial side of the proximal segment of said finger.

In a further embodiment, the data-input device further comprises a wrist-worn bracelet-type component that can permanently host elements that do not necessarily have to be worn on fingers or interdigits, such as energy units, processing units or auxiliary components.

In still further embodiment of the invention, the bracelet is configured to facilitate permanent or temporary hosting of all components of the data-input device.

In a further preferred embodiment, energy units are permanently placed within the bracelet and energy connection units are either wireless or use a cabling system that is automatically or semi-automatically retractable or able to be rolled-up or be foldable into the bracelet.

In another further preferred embodiment, processing units are permanently placed within the bracelet and signals/data connection units are either wireless or use a cabling system that is automatically or semi-automatically retractable or able to be rolled-up or be foldable into the bracelet.

In another advanced preferred embodiment, at least one processing unit is adapted to identify, interpret and convert a majority of continuous-contact actions into continuous data-inputs used by the client device by means of applying a set of transformation rules and conventions that convert certain continuous movements and/or pressures of transmitting units in contact with specific regions (continuous-contact regions) of the skin of the hand and/or of elements of the data-input device.

In a still further advanced preferred embodiment, the whole or parts of the thumb-reachable volar and radial skin areas of fingers 2-5 is a key continuous-contact region allowing the user wearing the data-input device to introduce continuous bi-dimensional positional data-inputs into the screen of a client device.

### BRIEF DESCRIPTION OF THE DRAWINGS

- **FIG. 1:**: Example of right-hand discrete contact action or chord.
- **FIG. 2:**: Example of right-hand continuous-contact action.
- **FIG. 3:**: Example of right-hand transmitter-to-skin contact.
- **FIG. 4:**: Example of right-hand receiving-sets contact.
- **FIG. 5:**: Example of right-hand skin-to-skin contact.
- **FIG. 6:**: Example of right-hand transmitter-to-receptor contact.
- **FIG. 7:**: Example of right-hand chord with simultaneous multiple transmitter-to-skin and skin-to-skin contacts.
- **FIG. 8A:**: Schematic front sectional view of fingers with internal receiving units implanted in fingers F2-5 and external receiving units implanted in fingers F2 and F3.
- **FIG. 8B:**: Schematic top dorsal-side-of-hand view of embodiment of Fig. 8A.
- **FIG. 9A:**: Schematic front sectional view of finger receiving sets.
- **FIG. 9B:**: Schematic top dorsal-side-of-hand view of embodiment of Fig. 9A.
- **FIG. 10A:**: Schematic front sectional view of bridged finger receiving sets.
- **FIG. 10B:**: Schematic top dorsal-side-of-hand view of embodiment of Fig. 10A.
- **FIG. 11:**: Top-lateral perspective view of hood-based thumb's transmitting set.
- **FIG. 12:**: Top-lateral perspective view of ring-based thumb's transmitting set.
- **FIG. 13:**: Lateral schematic view of nail-attached thumb's transmitting set including only one transmitting unit.
- **FIG. 14:**: Lateral schematic view of nail-integrated thumb's transmitting set including only one transmitting unit.
- **FIG. 15:**: Lateral schematic view of skin-implanted thumb's transmitting set including only one transmitting unit.
- **FIG. 16:**: Schematic front sectional view of possible disposition of internal and external receiving units within finger receiving sets.
- **FIG. 17A:**: Front view of finger receiving set with two internal receiving units and two external receiving units.
- **FIG. 17B:**: Bottom view of embodiment of Fig. 17A.
- **FIG. 17C:**: Top view of embodiment of Fig. 17A.
- **FIG. 17D:**: Right view of embodiment of Fig. 17A.
- **FIG. 18A:**: Dorsal-side-of-hand view of overall apparatus worn on right-hand, according to preferred embodiment of the invention.
- **FIG. 18B:**: Palm-side-of-hand view of embodiment of Fig. 18A but not showing the client device.
- **FIG. 19A:**: Schematic front sectional view of interdigit receiving sets.
- **FIG. 19B:**: Schematic top view of embodiment of Fig. 19A.
- **FIG. 20A:**: Palm-view of right-hand using the data-input device to execute a continuous-contact action on a specific continuous-contact region.
- **FIG. 20B:**: Path of movement along screen of a smartphone produced by the apparatus after processing continuous-contact actions of Fig. 20A.
- **FIG. 20C:**: Path of movement of a cursor along screen of a computer/tablet produced by the apparatus after processing continuous-contact actions of Fig. 20A.

### DETAILED DESCRIPTION OF EXEMPLARY EMBODIMENTS

The following aspects are important to the different embodiments of the invention.

In some of the subsequent text paragraphs, reference signs are mentioned which appear in the attached drawings.

### Wearability

The data-input device is meant to be worn by the user on only one of his/her hands, preferably on the thumb or 1^{st} finger of the hand (referred as finger 1 or F1) and on at least one of fingers 2^{nd}, 3^{rd}, 4^{th} and 5^{th} fingers of the hand (referred as fingers 2-5 or F2-5) or on one of 1^{st}, 2^{nd}, 3^{rd} and 4^{th} interdigital areas of the hand (referred as interdigits 1-4 or ID1-4).

The data-input device does not cover or significantly occlude any of the user's skin or nails of the hand except for portions of skin or nail of the thumb, and portions of skin of proximal segments of fingers 2-5 or of interdigits 1-4. This is a strong differential characteristic versus glove-like devices.

### User-input gestures

The data supplied by the data-input device (referred as "data-inputs") are destined to feed a client electronic appliance, computing device or the like (referred as "client device" or CD). Those data-inputs result from identifying and interpreting user-input gestures of the user's hand instrumented with the data-input device, wherein the majority of them are interactions between fingers of the same hand. These user-input gestures can, singly or in combination, comprise the following:
- discrete static positions (referred as "chords"),
- continuous-contact dynamic actions (referred as "continuous-contacts") such as sliding-like touching or almost-touching actions or pressure actions,
- approximating actions between different elements of the data-input device, or between elements of the data-input device and parts of the hand,
- other possible gesturing actions.

The majority of user-input gestures identified and processed by the data-input device
- are chord actions and continuous-contact actions that take place between elements of the data-input device worn on the thumb and the rest of the fingers 2-5 or interdigits 2-4 wherein the instrumented thumb directly contacts the skin or nail of said fingers or interdigits, or elements of the data-input device worn on said fingers or interdigits;
- are executable without any need of physical interaction with external elements other than those comprised within the data-input device and worn on the user's hand;
- and can be generated by the user without having to have or use his/her sight capabilities.

Reading and interpreting user-input gestures is achieved using electromagnetic signals transmitted by a transmitting unit and received:
- by internal receiving units configured to process electromagnetic signals that flow through the human body tissue and that are generated by direct contact between a transmitting unit and skin or nail of the user; and/or
- by external receiving units configured to process electromagnetic signals that flow via direct contact between a transmitting unit and said external receiving units;

Hence, sensors such as accelerometers, gyroscopes, infrared, optical or other physical pressure or bending sensing devices may be complementary but not key to the invention.

The majority of electromagnetic signals used by the data-input device are small radiations of currents with amperage below 1mA and frequency below 1MHz.

### Key components

In a first exemplary embodiment, the invention comprises the following components:
- one or more units sourcing energy (referred as "energy units") that generate the power needed to create and transmit the electromagnetic signals used by the data-input device,
- one or more electromagnetic-signals transmitting units (referred as "transmitting units" or TU1/2/3...) worn preferably on finger 1 TU1 wherein said transmitting unit(s) are organized in a set (referred as "thumb's transmitting set" or TS1),
- one or more electromagnetic-signals receiving units (referred as "receiving units") that are worn on fingers 1-5 and/or interdigits 1-4 of the hand,
- one or more processing and data storage elements (also referred as "processing units") that scan, clean, process, transform and store electromagnetic signals and data derived from them to generate the data-inputs to be sent to a client device,
- one or more wireless or cabled energy conveying elements (referred as "energy connection units" or EC) that convey power from energy units to transmitting units,
- one or more wireless or cabled signals or data conveying elements (referred as "signals/data connection units" or SC) that convey signals received or data derived from them, from receiving units to processing units,
- one or more wireless or cabled data-inputs connecting elements (referred as "data-inputs connection units" or IC) that convey data-inputs from processing units to a client device,
- a variety of optional auxiliary components such as on-off switching units, mode buttons, reset buttons, connectors, luminous status indicators, or aids that further facilitate proper configuration, adjustment, wearing and operation of the data-input device.

### Transmitting units

The majority of transmitting units are configured to be placed at/by approximately always-the-same fixed spots/regions of the hand.

Each transmitting unit comprises:
- at least one outwards-oriented transmitting electrode(s) with electromagnetic-signals transmitting plate(s) configured not to be in direct contact with the human body tissue of the finger on which the said transmitting unit is worn (referred as "transmitting finger"),
- at least one element(s) with insulating properties (referred as "insulating components" or IN) that are placed between the electrode plates and the human body tissue of the transmitting finger to avoid/mitigate flowing of electromagnetic signals from the transmitting unit into the human body tissue of the said transmitting finger,
- a variety of supporting components to support the transmitting unit and assure each transmitting unit is attachable to an always-the-same fixed spot/region of the surface of the skin or nail of the transmitting finger.

### Receiving units

The majority of receiving units are configured to be placed at/by approximately always-the-same fixed spots/regions of the hand.

Receiving units can be "internal" receiving units or "external" receiving units.

Internal receiving units (referred as IRU1/2/3...) are those configured to process electromagnetic signals that are received through the human body tissue and that were generated by a direct contact (a touching or approximating action) between a transmitting unit and skin or nail of the hand of the user.

Each internal receiving unit comprises:
- at least one inwards-oriented receiving electrode with electromagnetic-signals receiving plate(s) configured to be in direct contact with the human body tissue,
- at least one element with insulating properties to facilitate control of received electromagnetic signals,
- fixation means to fix and support the internal receiving unit and assure each internal receiving unit is removably attached to the hand or finger;

Internal receiving units are configured to be worn on proximal segments of fingers 1-5 and/or on interdigits 1-4.

The data-input device comprises at least one internal receiving unit.

External receiving units (referred as ERU1/2/3...) are those configured to process electromagnetic signals received via direct contact (a touching or approximating action) between a transmitting unit and said external receiving units.

Each external receiving unit comprises:
- at least one outwards-oriented receiving electrode with electromagnetic-signals receiving plate(s) configured not to be in direct contact with the supporting human body tissue of the hand,
- at least one element with insulating properties placed between the electrode plate(s) and the human body tissue to facilitate control of received electromagnetic signals and to avoid/mitigate direct flowing of electromagnetic signals between said external receiving unit and the said supporting human body tissue,
- fixation means to fix and support the internal receiving unit and assure each internal receiving unit is removably attached to the hand or finger.

In preferred embodiments of the invention, external receiving units are configured to be placed by the volar and/or radial side of the proximal segments of the fingers.

In still further preferred embodiments of the invention, external receiving units worn on a same finger are two in number: one configured to be worn by the volar side of the proximal segment of said finger, and the other one configured to be worn by the radial side of the proximal segment of said finger.

### Types of contacts

Input actions involving touching or approximating actions may, singly or in combination, comprise the following:
- a contact action between a transmitting unit and skin or nails of the hand (referred as "transmitter-to-skin contact" or T-S),
- a contact action between a transmitting unit and an external receiving unit (referred as "transmitter-to-receptor contact" or T-R),
- a contact action between a receiving set and an adjacent finger or another receiving set (referred as "receiving-set contact" or R-R),
- a contact action between portions of skin or nails of different parts of the hand (referred as "skin-to-skin contact" or S-S).

The majority of input actions processed by the data-input device imply actions in which the thumb's transmitting set participates, this is, transmitter-to-skin contacts and transmitter-to-receptor contacts.

### Multi-channeled communication

In a preferred embodiment of the invention, transmitting units worn on a same finger are more than one in number and a majority of them emit electromagnetic signals at different frequencies and/or with different characteristics with the purposes of enabling simultaneous multi-channeled communications and of facilitating unique identification of a transmitting unit by analyzing its electromagnetic signals.

### Transmitting-set supports

When several transmitting units are worn on a same finger, said transmitting units can be supported, bound to each other and attached to said finger by means of a single "transmitting-set support" or TSS, this is, a supporting component that integrates all functions of the supporting and insulating components of said transmitting units.

Furthermore, in a preferred embodiment of the invention, a transmitting-set support is "hood-based", this is, it presents a shape fundamentally composed by a hood-like element configured be worn on the finger fully/partially covering or wrapping its fingertip and/or other parts of its skin surface.

In order to facilitate proper adjustment to the finger, a hood-based transmitting-set support is preferably composed by flexible materials with certain degree of elasticity.

In an alternative embodiment of the invention, a transmitting-set support is "ring-based", this is, it presents a shape fundamentally composed by a fully/partially circled ring-like element (referred as "ring-element" or RE) and is configured to be worn on the finger partially covering or occluding its skin surface.

In order to facilitate proper adjustment to the finger, a ring-based transmitting-set support is preferably composed fundamentally by rigid or semi-rigid materials.

In another version of this alternative embodiment of the invention, the transmitting-set support is a hybrid combination of a ring-based transmitting-set support (including a ring-like element) and a hood-based transmitting-set support (also including a hood-like element covering part or all of the fingertip of the finger).

In another alternative embodiment of the invention, a transmitting-set support is easily attachable/detachable to/from the finger by means of an attachment mechanism or the like that allows easy engagement/disengagement with/from a small auxiliary component that is fixedly attached to the user's fingernail.

In a further embodiment, a transmitting-set support consists in an artificial nail complementing, extending or replacing the user's fingernail and integrating the at least one transmitting unit.

In a further embodiment, a transmitting-set support consists in an implant of at least one transmitting unit inside the human body tissue of the user's fingertip, leaving outwards-oriented electrodes of said transmitting unit(s) facing to the outside and sticking out of the skin.

### Receiving-set supports

Receiving units can be organized in so-called "receiving sets", wherein one or more receiving units of a same receiving set are supported and attached to the hand by means of a single removable receiving-set support, this is, a single component that is part of the receiving-set and that integrates all functions of supporting and insulating components of said receiving units of same receiving set.

A receiving-set supported by a receiving-set support that is worn on a single finger is referred, jointly with the receiving-set support, as a "finger receiving set" (or as FRS1-5 if respectively associated to fingers 1-5).

A receiving-set supported by a receiving-set support that is worn on an interdigital area and/or on one or two of its two adjacent fingers, is referred, jointly with the receiving-set support, as an "interdigit receiving set" (or as IRS1-4 if respectively associated to interdigits 1-4).

Signals/data connection units (SC) can also be referred as SC1-4 if respectively associated to finger receiving sets FRS1-4 or interdigit receiving sets IRS1-4, or SC5 if associated to finger receiving set FRS5.

### Ring-based finger receiving-set supports

Furthermore, in a preferred embodiment of the invention, at least one receiving set is worn on a finger and its receiving-set support presents a "ring-based" shape, this is, a shape fundamentally composed by a fully/partially-circled ring-like element configured to be worn on the proximal segments of a fingers.

In a further version of the prior preferred embodiment, finger receiving-set supports can present adjustment components/adaptations to allow fast, easy and precise rotational and/or translational adjusting of supported receiving units into their always-the-same optimal wearing/operating positions.

An example of these adjustment components/adaptations (referred as "lateral rotation adjustors" or LRA) are lateral flat-surfaces on ulnar and radial sides that face each other and belong to ring-based finger receiving sets worn on adjacent fingers.

Another example of adjustment components/ adaptations (referred as "top rotational adjustors" or TRA) are specific marks, carvings or protuberances placed at the top external surface of ring-based finger receiving sets.

### Hook/ring-based interdigit receiving-set supports

In a further embodiment of the invention, at least one receiving set is worn on an interdigital area and/or on one or two of its two adjacent fingers and its receiving-set support presents a "hook/rings-based" shape, this is, a shape that comprises a combination of a hook-like shape, configured to be worn on said interdigital area, and two not-fully circled ring-like shapes, configured to be worn on proximal segments of the fingers adjacent to said interdigital area.

In a further embodiment, a hook/rings-based receiving-set support comprises a movable joint (referred as MJ) to allow articulated connection between two parts of the receiving-set support.

Hook/rings-based receiving-set supports with movable joints may also be configured, via specific shapes and/or materials of the receiving-set support and/or via additional simple spring-mechanism or the like, to induce separation and/or avoid approximation of the two connected parts of the receiving-set support from each other, whilst keeping them connected via the movable joint, in order to improve wearability and to facilitate adequate contact of the supported internal receiving units with the human body tissue of the fingers

### Implanted receiving-set supports

In a further embodiment, when one or several internal receiving units are worn on a same finger, said internal receiving unit(s) can be supported and attached to said finger by means of a non-removable receiving-set support configured as a full implant of said internal receiving unit(s) inside the human body tissue of the user's finger leaving said internal receiving unit(s) completely under the skin and in contact with the human body tissue.

### Receiving-set contact detectors

In a further preferred embodiment of the invention, at least one receiving set comprises a component (referred as "receiving-set contact detector" or RSCD), such as a simple electrical or mechanical sensor, that can detect contacts between said receiving set and a finger adjacent to fingers associated to said receiving set, or contacts between said receiving set and another receiving set worn on fingers adjacent to fingers associated to said receiving set, or contacts between parts of said receiving set that are worn on different fingers.

These receiving-set contact detectors enrich and extend the range of detectable user-input gestures to be processed by the data-input device.

In a still further preferred embodiment of the invention, receiving-set contact detectors can identify receiving-set contacts by detecting simple contact between existing or auxiliary elements of the data-input device that are attached to a first and a second adjacent receiving-set supports, wherein said elements are configured to be placed facing each other, one by the ulnar side of a finger to which the first receiving-set is associated, and the other one by the radial side of the nearest adjacent finger to which the second receiving set is associated.

### Bridging components

In possible embodiments of the invention, finger or interdigit receiving-set supports can be "bridged" or joined to each other by means of bridging elements (referred as "bridges" or BR) with purposes of facilitating fast, easy and correct handling (putting on, taking off and adjusting) of the receiving sets and/or of reducing the number and complexity of signals/data connection units.

In order to facilitate proper adjustment and wearing of the receiving-set supports whilst comfortable wearing and agile operation of the data-input device, bridges are preferably composed by materials having certain degrees of flexibility and elasticity.

### Identification of user-input gestures

The data-input device is indented to univocally and unequivocally identify and interpret a significantly rich and high range of user-input gestures thanks to possibly presenting:
- different transmitting units attached to different spots/regions of the hand,
- different channels of communication by using electromagnetic signals with different characteristics,
- different positions of internal and external receiving units worn on fingers and/or interdigits.

A specific chord can be properly identified, for example, by adequately reading the following variables:
- which chording modes and chords languages are active at the time of the execution of the chord,
- which internal receiving units receive electromagnetic signals and what are the specific characteristics of those signals (to identify transmitting units / channels of communication used and possible/approximate points of skin contacted in transmitter-to-skin contacts),
- which external receiving units are contacted and by which transmitting units (to identify transmitter-to-receptor contacts),
- which receiving sets contact with adjacent fingers or with other receiving sets (to identify receiving-set contacts).

The accuracy of the estimations of the points of contact of transmitter-to-skin contacts, as well as the certainty of whether other types of contacts have also intervened in the user-input gestures, increase highly not only with the sensitivity and resolution of the sensors, but also with the number of transmitting channels and the number and variety of the placements of internal and external receiving units.

The inclusion of additional transmitting sets apart from the thumb's receiving set could further increase the detection-accuracy, extension and richness of the range of user-input gestures processable by the data-input device.

### Interpretation of user-input gestures

The majority of chord user-input gestures are interpreted and converted into data-inputs for a client device by means of applying hand/fingers gesture languages (referred as "chords languages") previously learnt or consultable by the user desiring to properly operate the data-input device.

Chords languages are meant to provide a set of differentiated chords as ample and rich as necessary to be able to cover the whole range of possible data-inputs required by a client device. They may be standard or customized, and they are generally devised to optimize speed and easiness of chording actions.

The majority of continuous-contact user-input gestures are identified, interpreted and converted into continuous data-inputs by means of applying a set of transformation rules and conventions (referred as "continuous-contact transformations") that convert certain continuous movements and/or pressures of a transmitting set in contact with regions of the skin or nails of fingers 2-5 and/or other parts of the hand and/or elements of the data-input device into alteration of variables used by the client device.

Approximating actions and other actions may also be detected, interpreted and converted into data-inputs by means of applying transformation rules and conventions and they may as well be interpreted to aid the interpretation of other prior or posterior user-input gestures.

Some user-input gestures may be interpreted and converted not into data-inputs for the client device, but into commands for the data-input device. Specific chords may be reserved, for example, to reset the data-input device, to activate a mode for inputting chords, to activate a specific set of chords, to activate a mode for inputting continuous-contacts, to activate a specific chords language, or to activate a specific continuous-contact transformation.

Identical chords may be interpreted differently depending on the active mode(s) at the time of execution of the chord and/or depending on the user actions realized previously or posteriorly to the execution of the chord.

Resulting data-inputs to be sent to a client device may be of varied sort: alphanumeric characters, numbers, symbols, commands, spatial positioning data, etc.

### Bracelet & connection units

Another preferred embodiment of the invention further comprises a bracelet-type component (referred as "bracelet" or BR) that is worn on the wrist of the hand, that can permanently or temporary host some elements of the data-input device. Exemplary permanently-hosted elements could be any elements that, when in operating mode, do not necessarily have to be worn on the fingers or interdigits of the hand (such as the whole or parts of energy units, processing units and auxiliary components). Exemplary temporarily-hosted elements could be any elements that, when in operating mode, do have to be worn on the fingers or interdigits of the hand (such as the whole or parts of transmitting sets, receiving-sets, energy connection units and signals/data connection units).

The bracelet can also integrate additional complementary elements to the data-input device such as watches, screens, cameras, accelerometers or other sensors.

In a further embodiment of the invention, energy units are very minimal in size and weight and can be embedded within transmitting sets.

In further preferred embodiment of the invention, energy units are permanently placed within the bracelet and energy connection units are either wireless or using a cabling system that is automatically or semi-automatically retractable or able to be rolled-up or be foldable into the bracelet, possibly taking the complementary function of creating a moderate pulling pressure towards the wrist to aid supporting function of worn transmitting-set supports, in addition to facilitating collection and hosting of cables into the bracelet when the data-input device is not worn in operating mode.

In another further preferred embodiment of the invention, processing units are permanently placed within the bracelet and signals/data connection units are either wireless or use a cabling system that is automatically or semi-automatically retractable or able to be rolled-up or be foldable into the bracelet, possibly taking the complementary function of creating a moderate pulling pressure towards the wrist to aid supporting function of worn receiving-set supports, in addition to facilitating collection and hosting of the cables into the bracelet when the data-input device is not worn in operating mode.

### Detailed description of the drawings

Bearing in mind the exposed concepts and functionalities common to the different embodiments, the different embodiments reflected in the attached figures are below described in greater detail:

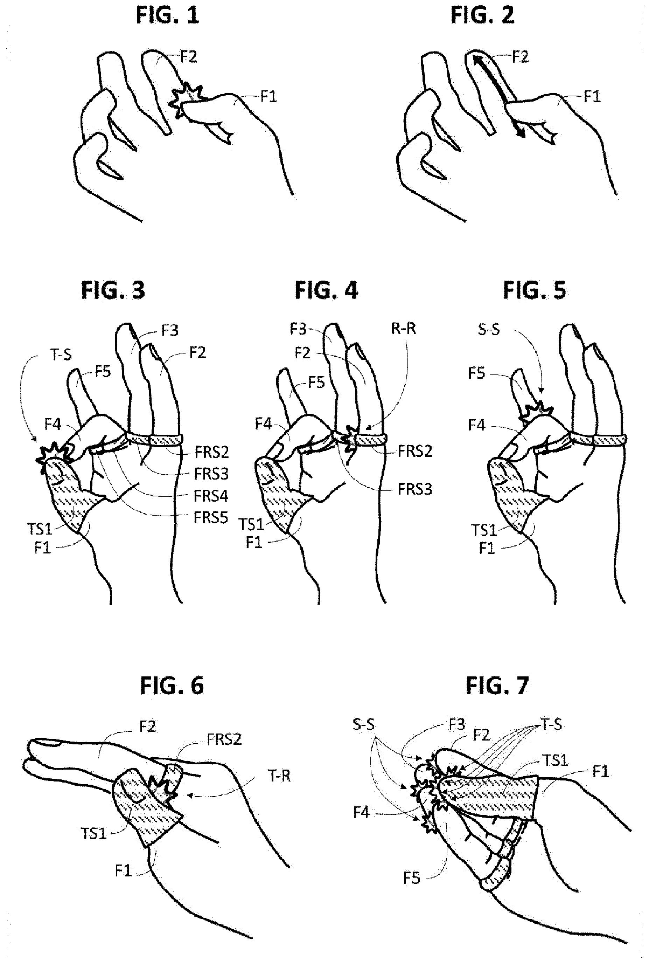

Fig. 1 illustrates a right-hand chord, which is one of the relevant types of user-input gestures that can be identified and interpreted by the proposed data-input device. In this figure, the chord is exemplified as a touching contact between the 1^{st} finger (thumb) F1 and the 2^{nd} finger F2.
Fig. 2 illustrates a right-hand continuous-contact, which is also one of the relevant types of user-input gestures that can be identified and interpreted by the proposed data-input device. In this figure, the continuous-contact is exemplified as a sliding touching contact between the 1^{st} finger (thumb) F1 and the 2^{nd} finger F2.
Fig. 3 shows an example of a right-hand chord executed by a user wearing the proposed data-input device, wherein the identification of the chord is based on detecting a transmitter-to-skin contact T-S, herein exemplified as a touching contact between the thumb's transmitting set TS1 (worn on finger F1), and the 4^{th} finger F4. This figure also shows finger receiving sets FRS2-5, respectively worn on fingers F2-5.
Fig. 4 shows the same right-hand chord of Fig. 3 wherein the identification of the chord can be complemented with the detection of a receiving-set contact R-R, herein exemplified as a touching contact between finger receiving set FRS2 (worn on finger F2) and finger receiving set FRS3 (worn on finger F3). As in Fig. 3, a thumb's transmitting set TS1 is worn on the thumb F1.
Fig. 5 shows the same right-hand chord of Fig. 3 wherein the identification of the chord can be complemented with the detection of a skin-to-skin contact S-S, herein exemplified as a touching contact between the 4^{th} finger F4 and the 5^{th} finger F5. Again, as in Figs. 3-4, a thumb's transmitting set TS1 is worn on the thumb F1.
Fig. 6 shows another different example of a right-hand chord executed by a user wearing the data-input device, wherein the identification of the chord is based on detecting a transmitter-to-receptor contact T-R, herein exemplified as a touching contact between the thumb's transmitting set TS1 worn on thumb F1 and a finger receiving set FRS2 worn on 2^{nd} finger F2.
Fig. 7 shows another different example of a right-hand more complex chord executed by a user wearing the data-input device, wherein the identification of the chord is fundamentally based on detecting multiple simultaneous transmitter-to-skin contacts T-S, possibly also complemented with the detection of skin-to-skin contacts S-S. In this figure, the exemplified simultaneous transmitter-to-skin contacts T-S take place between the thumb's transmitting set TS1 and the 2^{nd} finger F2, between the thumb's transmitting set TS1 and the 3^{rd} finger F3, between the thumb's transmitting set TS1 and the 4^{th} finger F4, and between the thumb's transmitting set TS1 and the 5^{th} finger F5; and the exemplified simultaneous skin-to-skin contacts S-S take place between 2^{nd} finger F2 and 3^{rd} finger F3, between 3^{rd} finger F3 and 4^{th} finger F4, and between 4^{th} finger F4 and 5^{th} finger F5.

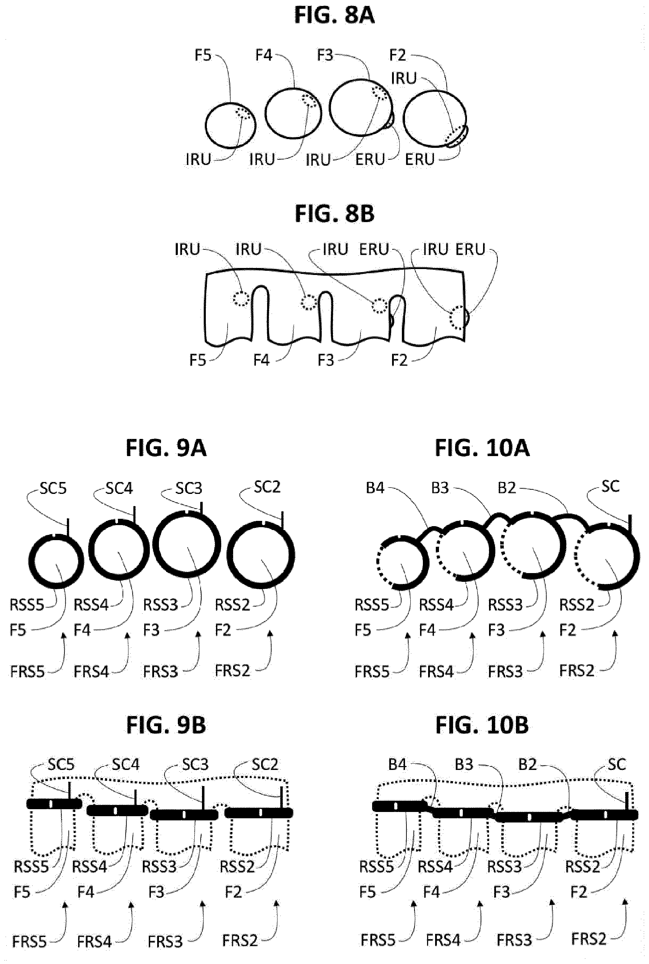

Figs. 8A-B show, in a front sectional view (Fig. 8A) and in a top dorsal-side-of-hand view (Fig. 8B), an exemplary embodiment of the invention worn on a right-hand wherein the internal and external receiving units are implanted in fingers F2-5. Each of fingers F3-5 present one internal receiving unit IRU implanted under the skin of the top radial side of proximal segment of the finger. Finger F3 additionally presents an external receiving unit ERU partially implanted under the skin at the volar-radial side of the proximal segment of the finger. Finger F2 presents an internal receiving unit IRU and an external receiving unit ERU, both integrated in one single component that is partially implanted under the skin at the volar-radial side of the proximal segment of the finger, leaving internal receiving unit IRU completely under the skin and in contact with the human body tissue, and leaving external receiving unit ERU facing outwards and sticking out of the skin.
Figs. 9A-B show, as an embodiment of the invention worn on a right-hand, ring-based finger receiving sets FRS2-5 for respective fingers F2-F5, in a front sectional view (Fig. 9A) and in a top dorsal-side-of-hand view (Fig. 9B). Finger receiving sets FRS2-5 are supported by respective integrated receiving-set supports RSS2-5. In this embodiment, receiving-set supports RSS2-5 have the shape of fully-circled rings and finger receiving sets FRS2-5 are connected to processing units by respective cabled signals/data connection units SC2-5.
Figs. 10A-B show a similar embodiment as that of Figs. 9A-B, presenting same front-sectional view (Fig. 10A) and same top dorsal-side-of-hand view (Fig. 10B), and partly using same reference numerals. However, in this embodiment finger receiving sets FRS2-5 are joined to each other by means of bridge-like elements (bridges) B2-4, to facilitate fast, easy and correct putting on, taking off and adjusting of said receiving sets. In these figures, receiving-set supports RSS2-5 are partially-circled rings, and finger receiving sets of adjacent fingers are connected to each other in the following manner: bridge B2 connects finger receiving set FRS2 with finger receiving set FRS3, bridge B3 connects finger receiving set FRS3 with finger receiving set FRS4, and bridge B4 connects finger receiving set FRS4 with finger receiving set FRS5. In order to facilitate proper adjustment of finger receiving sets FRS2-5 whilst agile operation of the data-input device, bridges B2-4 are preferably composed by materials having certain degrees of flexibility and elasticity. In this embodiment the connected receiving sets FRS2-5 are connected to processing units by a single cabled signal/data connection unit SC.

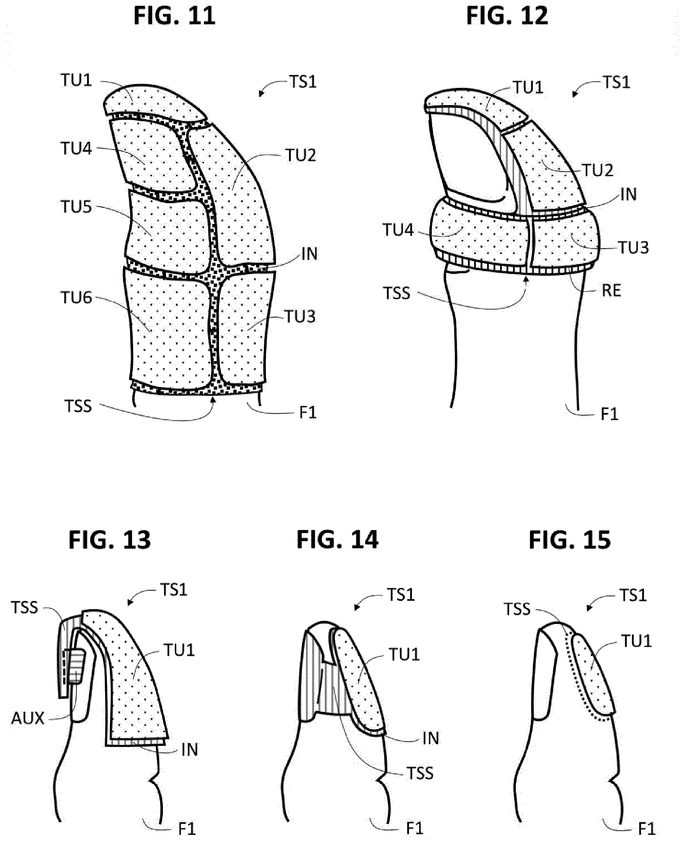

Fig. 11 shows a preferred embodiment of the invention, where the transmitting-set support TSS of a thumb's transmitting set TS1 presents the shape of a hood or the like and is configured be worn on the thumb F1 fully/partially covering or wrapping its fingertip and/or other parts of the surface of the thumb F1. The figure depicts then a top-lateral perspective view of a hood-based thumb's transmitting set TS1 for the right hand. The thumb's transmitting set TS1 comprises a plurality of transmitting units TU1-6 supported on an integrated transmitting-set support TSS which also includes insulating components IN necessary to impede electromagnetic-signals to flow directly from transmitting electrodes of transmitting units into the human body tissue of the finger holding said transmitting units, in this case the thumb F1. Each of transmitting units TU1-6 comprises one or more transmitting electrodes (not shown).
Fig. 12 shows a similar configuration of a thumb's transmitting set TS1, however not hood-based but ring-based, as it is fundamentally supported on a ring-like element RE. In this alternative embodiment of the invention, the transmitting set TS1 is configured to be worn on the thumb F1 covering just a part of it (the front and upper portion of it), and it presents an integrated transmitting-set support TSS that is based on a fully-circled ring-shaped element RE. The integrated transmitting-set support TSS also includes insulating components IN necessary to impede electromagnetic-signals to flow directly from transmitting units into the human body tissue of the finger holding said transmitting units.
Fig. 13 shows a further embodiment of the invention, where the transmitting-set support TSS of a thumb's transmitting set TS1 including one transmitting unit TU1 is easily attachable/detachable to/from the finger by means of an attachment mechanism or the like that allows easy engagement/disengagement with/from a small auxiliary component AUX that is fixedly attached to the user's fingernail. For greater clarity of the Figure, the depicted embodiment shows a transmitting set including a single transmitting unit. However, as stated above, there may be more than one transmitting unit in the same transmitting set.
Fig. 14 shows a further embodiment of the invention, where the transmitting-set support TSS of a thumb's transmitting set TS1 including one transmitting unit TU1 is integrated with an artificial nail complementing, extending or replacing the user's fingernail. For greater clarity of the Figure, the depicted embodiment shows a transmitting set including a single transmitting unit. However, as stated above, there may be more than one transmitting unit in the same transmitting set.
Fig. 15 shows a further embodiment of the invention, where the transmitting-set support TSS of a thumb's transmitting set TS1 including one transmitting unit TU1 is implanted inside the human body tissue of the user's fingertip, leaving outwards-oriented electrodes of said transmitting unit facing to the outside and sticking out of the skin. For greater clarity of the Figure, the depicted embodiment shows a transmitting set including a single transmitting unit. However, as stated above, there may be more than one transmitting unit in the same transmitting set.

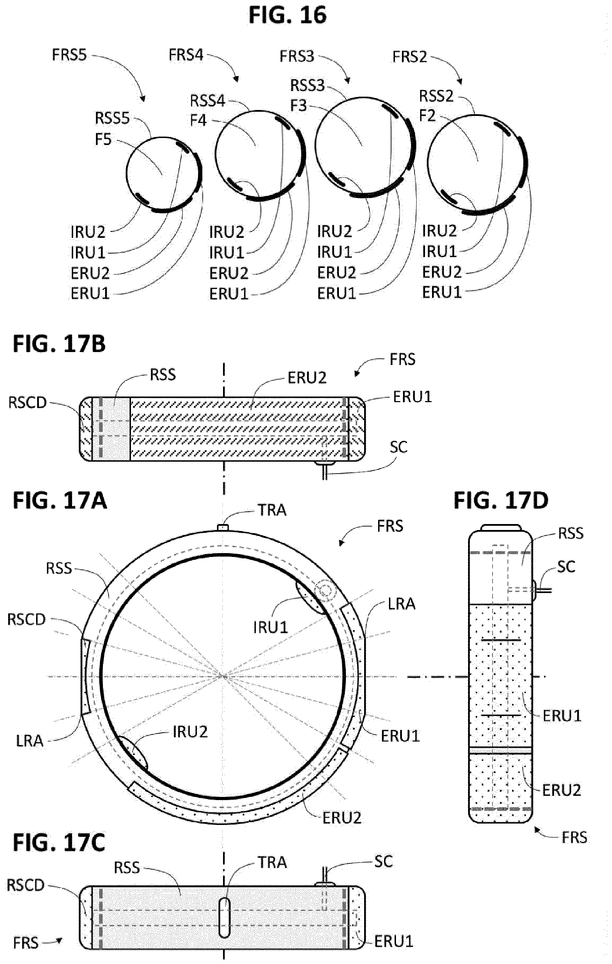

Fig. 16 is a schematic front view of preferred dispositions of internal receiving units IRU1-2 and external receiving units ERU1-2 on each of four fully-circled ring-based finger receiving sets FRS2-5 for respective right-hand fingers F2-F5. Each of the shown receiving-set supports RSS2-5 of respective finger receiving sets FRS2-5 has attached a first external receiving unit ERU1 placed by the radial side of the corresponding wearing finger (lateral side nearest to the thumb) and a second external receiving unit ERU2 placed by the volar side of the corresponding wearing finger (bottom or palm-side of the finger). Each of the shown receiving-set supports RSS2-5 also has attached a first internal receiving unit IRU1 and a second internal receiving unit IRU2 placed at diametrically opposite sides of the inner surface of the receiving-set support.
Figs. 17A-B-C-D show several views (respectively front, top, bottom and lateral) of a ring-based finger receiving set FRS configured for a 3^{rd} or 4^{th} finger of a right-hand. The illustrated finger receiving set FRS comprises an integrated receiving-set support RSS with the shape of a fully-circled ring, two external receiving units ERU1-2 configured to be placed respectively by the radial and volar side of the receiving finger, two diametrically opposed internal receiving units IRU1-2 configured to be placed in direct contact with the skin of the receiving finger, one adjacent-fingers-proximity detector AFPD configured to be placed by the ulnar side of the receiving finger, and some auxiliary components (not shown). The finger receiving set FRS also includes a cabled signals/data connection unit SC (in this example located at the back top radial side of the receiving-set support RSS), a top rotation adjustment component TRA located at the top of the receiving-set support RSS, a flat-faced lateral rotation adjustor LRA at the volar side of the receiving-set support RSS, and another flat-faced lateral rotation adjustors LRA integrated with an external receiving unit ERU1 at the radial side of the receiving-set support RSS. Adjustment components TRA and LRA are configured to facilitate fast, easy and precise rotational and/or translational adjustment of the finger receiving set into its optimal wearing position for operating the data-input device.

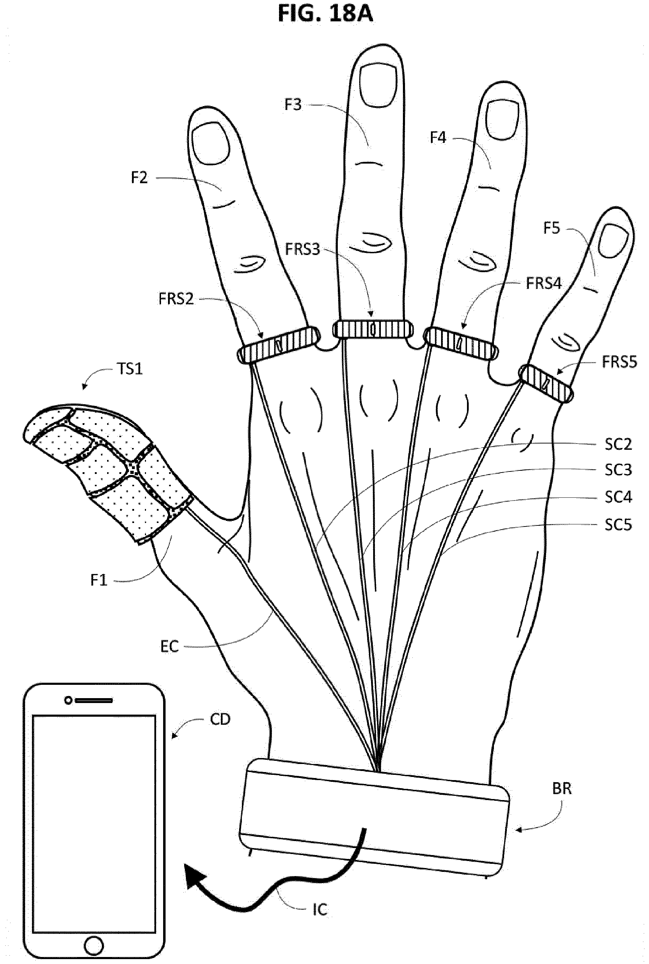

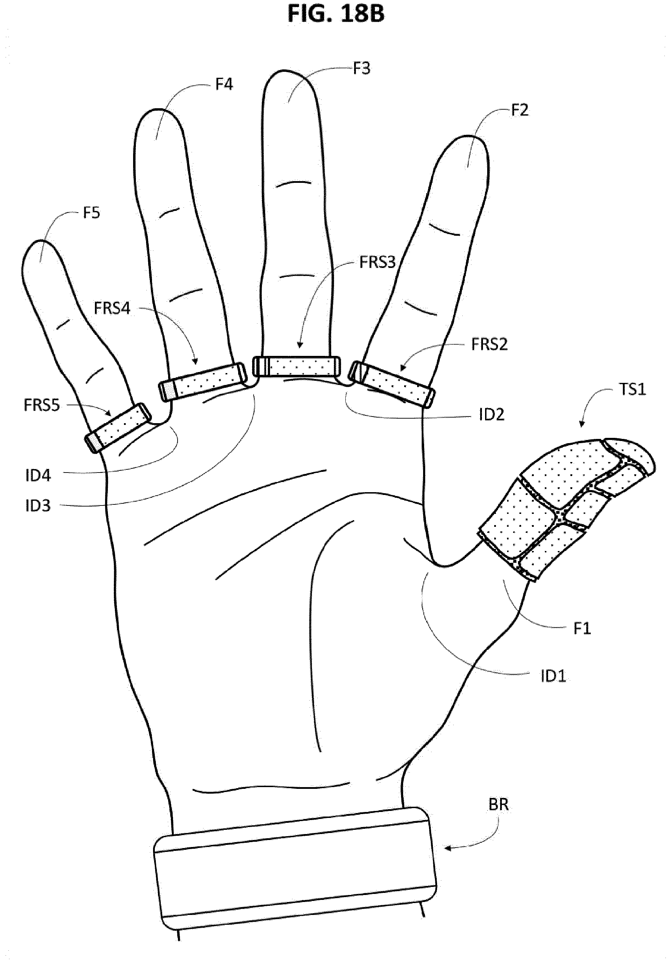

Figs. 18A-B show a further embodiment of the invention worn on a right-hand presenting a dorsal-side-of-hand view (Fig. 18A) and a palm-side-of-hand-view (Fig. 18B), wherein Fig. 18A schematically also shows an associated client device CD and a wireless data-inputs connection unit IC to convey data-inputs from processing units (not shown) to the client device CD. Both figures show a right-hand wearing the data-input device comprising a hood-based thumb's transmitting set TS1 worn on thumb F1, four ring-based finger receiving sets FRS2-5 worn on fingers F2-5, a bracelet BR worn on the wrist of the same hand, a cabled energy connection unit EC, and four cabled signals/data connection units SC2-5. The bracelet-type component BR contains at least one energy unit (not shown) and at least one processing unit (likewise not shown), and the cabled energy connection unit EC connects energy units with transmitting units of the thumb's transmitting set TS1, and cabled signals/data connection units SC2-5 make the connection between internal and external receiving units of respective finger receiving sets FRS2-5 and processing unit(s) hosted within a bracelet BR. In this embodiment, the surface of the skin and nails of the hand is fundamentally free from coverings or occlusions except for a major top portion of the thumb F1 and the bottom proximal sections of fingers F2-5. Figure 18B also shows the interdigital areas of the hand ID1-4.

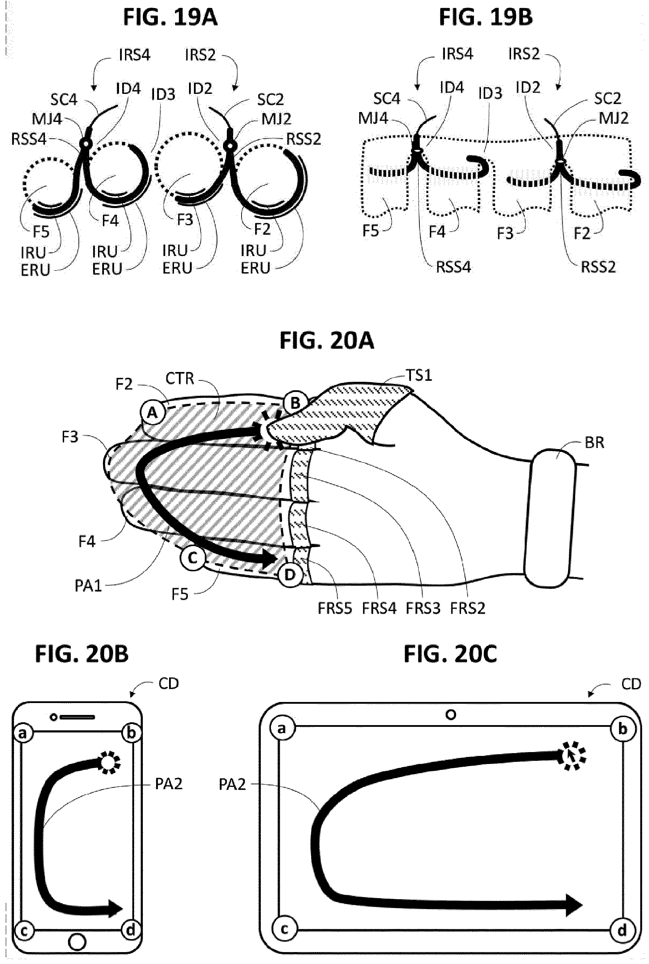

Figs. 19A-B show a front sectional view (Fig. 19A) and a top dorsal-side-of-hand view (Fig. 19B) of an alternative embodiment of the invention with no finger receiving sets and just two interdigit receiving sets IRS2 (worn on interdigit 2 with adjacent fingers F2 and F3) and IRS4 (worn on interdigit 4 with adjacent fingers F4 and F5). Interdigit receiving sets IRS2 and IRS4 are supported by means of respective receiving-set supports RSS2 and RSS4, both presenting a combination of a hook-like shape (worn in contact with an interdigit) and two partial ring-like shapes (worn in contact with proximal segments of fingers adjacent to said interdigit). Each of receiving-set supports RSS2 and RSS4 is divided in two portions that can rotate relative to each other about a movable joint referred as MJ2 (if part of RSS2) or MJ4 (if part of RSS4). SC2 and SC4 show cabled signals/data connection units that make the connection between receiving units supported by respective receiving-set supports RSS2 and RSS4 and processing unit(s).
Figs. 20A-B-C illustrate a continuous-contact transformation of continuous-contact user-input gestures executed by a right-hand wearing the data-input device presented as fundamentally comprising a thumb's transmitting set TS1, four finger receiving sets FRS2-5 and a bracelet BR (rest of components not shown). In the illustrated case, the thumb wears a thumb's transmitting set TS1 and, whilst maintaining a dynamic touching contact with the volar part of the skin of fingers F2-5, it follows an approximately semi-circular path PA1 moving from top-right to left-center to bottom-right within a continuous-contact region CTR delimited by imaginary points A-B-C-D on the palm of the user's hand. The continuous-contact user-input gestures are converted by the data-input device into positional movements that describe a corresponding path PA2 along the rectangular screen, delimited by corners a-b-c-d, of a client device CD, which is exemplified as a smartphone (in Fig. 20B) or as an iPad or computer screen (in Fig. 20C). It is to be highlighted that, as with discrete contact actions, movements of the thumb along a continuous-contact region CTR do not require the hand to be kept in a static position. As way of example, in Fig. 20A, the 4 fingers F2-5 or the right-hand forming the continuous-contact region CTR may bend as path PA1 is drawn by the thumb's transmitting set TS1; in fact, this movement of the continuous-contact region CTR can facilitate adequate reach and proper execution of continuous-contact actions.

The exemplary embodiment depicted in Figs. 20A-B-C refers to an example where the user introduces continuous bi-dimensional positional inputs within the screen of a client device. However, unidimensional or linear inputs into the client device (not shown) are also possible (e.g. by moving the dorsal tip of the thumb's transmitting set up and down along the longitudinal axis of any of fingers 2-5).

### Preparing the data-input device

Following there is a list of explanatory steps on how the data-input device, in a preferred embodiment, is initiated and prepared for operation:
1) The user takes the data-input device which is fully folded and guarded with/within its bracelet and puts it on his/her wrist.
2) The user pulls out the thumb's transmitting set from the bracelet, puts it on his/her thumb and makes the necessary adjustments to assure it is properly placed with all transmitting units placed at specific always-the-same fixed spots/regions of the thumb.
3) The user pulls out the receiving sets from the bracelet, puts them on his/her fingers 2-5 and/or interdigital areas 2-4 and makes the necessary adjustments (possibly with the aid of top or lateral rotational adjustors) to assure they are properly placed with all internal and external transmitting electrodes placed at specific always-the-same fixed spots/regions of fingers 2-5 and/or interdigital areas 2-4. The retrieving, putting on and adjusting of the receiving sets will vary in way and easiness of execution depending on whether the data-input device comprises more or less number of finger receiving sets, of interdigit receiving sets and of bridged receiving sets. As way of example, handling of only two interdigit receiving sets, instead of four finger receiving sets, could potentially be easier and faster without having to imply a reduction on the number and positioning of the receiving units.
4) The user activates the data-input device, for example via an auxiliary component such as an on-off switch, placed at the bracelet.
   The user may also authenticate himself and unblock the data-input device for example via an auxiliary component in the form of a fingerprint sensor integrated with the thumb's transmitting unit, or via a specific chord or combination of chords which is only known by the user and which can also possibly be linked to specific biometric and motional characteristics of the user's hand.
5) The processing units run initial internal processes to check and assure adequate operating conditions such as readiness of components, availability of connections and suitability of environmental conditions.
6) The user checks the status of the data-input device by reading auxiliary components that are placed in the bracelet or integrated with other elements of the data-input device and that signal the results of the processes run by the processing units.
7) If needed or advised, the user may execute complementary processes such as those to partially/fully reset the data-input device, to calibrate it, to load configurational information like the chords languages he may want to use, or to customize its functioning according to his/her desires or to the specific shapes and motional characteristics of his/her hand.

Once done all checking, repairing, configuration and customization operations, the data-input device is ready for operation.

### Operating the data-input device with chords

Following there is a list of explanatory steps on how the data-input device works when the user executes static user-input gestures or chords:
1) The user wants to generate a specific discrete data-input to be entered into the client device, such as a command or a character, and he/she knows which specific chord needs to execute (with hand instrumented with the data-input device) to generate the desired data-input as he/she already knows or can consult the specific chords languages that are activated into the data-input device.
2) If necessary, the user activates the mode to input chords via switching of an auxiliary component or via executing a specific chord or combination of chords.
3) The user executes a basic chord by making a single static contacting action wherein a transmitting unit of the thumb's transmitting set touches:
   - either a specific spot of the skin or nail of a finger fingers 2-5,
   - or an external receiving unit worn by the radial or volar sides of a finger of fingers 2-5.
   The user may also execute more complex chords such as contacting actions where several transmitting units of the thumb's transmitting set are simultaneously engaged, and/or more than one spot/region of skin of a same finger is simultaneously contacted (e.g. skin regions at both sides of a crest dividing them), and/or more than one finger of fingers 2-5 is simultaneously contacted.
   The chords might also be executed with different types of pressure and contact time durations.
   Identification of chords may be supported by additional identification of preceded or succeeded approximating actions such as movements from the thumb's transmitting set approximating to one of fingers 2-5 or of one of fingers 2-5 approximating the thumb's transmitting set.
   Executing a chord could for example replace the action of tapping a key on a smartphone's on-screen keyboard or of tapping a key or a combination of keys on a common computer keyboard.
4) When a simple chord implies a transmitter-to-skin contact between a transmitting unit and a spot of skin of a finger, the engaged transmitting unit on the thumb's transmitting set, which is powered by energy units via energy connection units, transmits electromagnetic signals that flow from outwards-oriented electrodes of the engaged transmitting unit, through the human body tissue of the contacted finger, into inwards-oriented electrodes of internal receiving units placed near the interphalangeal joints.
   Electromagnetic signals from the thumb's transmitting set are impeded from flowing through the human body tissue of the thumb thanks to the insulating functions of the insulating components of the transmitting units.
   If it is the case of a simple chord that implies a direct contact between a transmitting unit and a single external receiving unit, the engaged transmitting unit of the thumb's transmitting set emits an electromagnetic signal that flows directly from outwards-oriented transmitting electrodes of the engaged transmitting unit into outwards-oriented receiving electrodes of the engaged external receiving unit.
5) The internal and external receiving units transmit received electromagnetic signals or data derived from them to the processing units via the data connection units.
6) The processing units execute a variety of pre-processing processes to scan, clean, filter, refine, transform and prepare the received signals or raw-data into pre-processed data that can be adequately detected and interpreted in order to facilitate identification of correctly-executed chords with maximal levels of accuracy. Some of these pre-processing functions can possibly be shifted to other components based in the receiving units.
7) The processing units also execute a variety of processes to convert the pre-processed data associated to the chord into a specific data-input. Alternatively, some or all of the data processing could be shifted from the data-input device to the client device.
8) The processing units send the generated data-inputs into the client device via a data-inputs connection unit. If some or all of the data processing is shifted to the client device, it is not final data-inputs, but raw-data or pre-processed data what is sent to the client device.
9) The client device receives and processes the data-inputs sent by the data-input device. If some or all of the data processing is shifted to the client device, it is not data-inputs, but raw-data or pre-processed data what is received and processed by the client device.

### Operating the data-input device with continuous-contacts

Following there is a list of explanatory steps on how the data-input device works when the user executes user-input gestures that are continuous-contact actions:
1) The user wants to generate a specific continuous data-input for the client device, such as a gradual variation of a variable of the client device or a positional movement of an element within a screen of the client device.
   The user knows how to execute the continuous-contact action that will generate the desired continuous data-inputs because he knows or can consult the continuous-contact transformations which are already activated in the data-input device.
   Some examples of continuous-contact transformations that result into alteration or modification of unidimensional or bi-dimensional data inputs are the following:
   - Linear positional data-inputs to generate moving of a vertical slider in a client device is achieved by touching and moving the dorsal tip of the thumb's transmitting set up and down along the skin of tips of fingers 2-5.
   - Linear positional data-inputs to generate moving of a horizontal slider in a client device is achieved by touching and moving the dorsal tip of the thumb's transmitting set left and right along the skin of finger 2.
   - Bi-dimensional positional data-inputs to generate moving of a cursor across a screen of a client device is achieved by touching and moving the volar tip of the thumb's transmitting set across the skin encompassed within the tips of fingers 2-5, the proximal crests of fingers 2-5, the whole radial side surface of finger 2 and the whole volar surface of finger 5.
2) If necessary, the user activates or deactivates the mode to allow entering of continuous-contact actions via switching of an auxiliary component or via executing a specific chord or combination of chords.
   Different continuous-contact modes (implying different continuous-contact regions associated) may exist, e.g. to move a vertical slider, to move a horizontal slider, to move a cursor, etc.
3) The user executes a continuous-contact action by putting in contact and sliding one relative to the other a transmitting unit of the thumb's transmitting set and:
   - either a specific spot of the skin or nail of a finger fingers 2-5,
   - or an external receiving unit worn by the radial or volar sides of a finger of fingers 2-5.
   The continuous-contact may be executed with different types of pressures and contact time durations.
   Executing a continuous-contact action with the data-input device could for example replace actions such as modifying the volume or light of the screen of an electronic device or such as moving a slider or placing a cursor on the screen of a smartphone, tablet, laptop or desktop computer.
4) Rest of functioning steps of operating the data-input device with continuous-contact actions is significantly similar as those with chords, but with the differences of having to handle higher amounts of data and of having to run more intense and complex processes, consequently requiring the data-input device to include higher-end components, possibly presenting higher sensitivity, connectivity, accuracy, processing performance, storage capacity, etc.

The implementation is by no means limited to the above embodiments and above-referenced aspects and functionalities, but many modifications and combinations can be made within the scope of the appending claims.

## Claims

1. Data-input device
for entering data-inputs into an electronic or computing client device, the data-input device configured to be worn by a user on only one of his/her hands,
wherein data-inputs for the client device result from identifying and interpreting user-input gestures that, singly or in combination, comprise discrete static hand/fingers positions, continuous dynamic actions and approximating actions;
wherein reading and interpreting user-input gestures is achieved via capacitive sensing or direct electrical-current detection using electromagnetic signals transmitted by a transmitting unit and received:
- by internal receiving units configured to process electromagnetic signals that flow through the human body tissue and that are generated by direct contact between a transmitting unit and skin or nail of the user; and/or
- by external receiving units configured to process electromagnetic signals that flow via direct contact between a transmitting unit and said external receiving units;
wherein transmitting units and receiving units are configured to be placed at/by approximately always-the-same fixed spots/regions of the hand;
wherein the data-input device comprises:
- at least one energy unit to generate the power needed to create and transmit electromagnetic signals used by the data-input device;
- at least one transmitting unit for transmitting electromagnetic-signals worn on the thumb;
- at least one internal receiving unit for receiving electromagnetic-signals worn on fingers 2-5 and/or interdigits 1-4 of the hand;
- at least one processing unit for scanning, cleaning, processing, transforming and storing electromagnetic signals and data derived from them to generate the data-inputs to be sent to a client device;
- at least one energy connection unit for conveying (wireless or cabled) power from energy units to transmitting units;
- at least one signals/data connection unit for conveying (wireless or cabled) signals received or data derived from them, from receiving units to processing units;
- at least one data-inputs connection unit for conveying (wireless or cabled) data-inputs from processing units to a client device;
and wherein each transmitting unit further comprises
- at least one outwards-oriented transmitting electrode with electromagnetic-signals transmitting plate(s) configured not to be in direct contact with the human body tissue of the finger on which the said transmitting unit is worn (transmitting finger);
- at least one element with insulating properties (insulating component) placed between the electrode plate(s) and the human body tissue of the transmitting finger;
- fixation means to fix and support the transmitting unit and assure each transmitting unit is removably attached to the transmitting finger;
and wherein when more than one transmitting unit is worn on the thumb, a majority of said transmitting units emit electromagnetic signals at different frequencies and/or with different characteristics for enabling simultaneous multi-channeled communications and facilitating unique identification of a transmitting unit by analyzing its electromagnetic signals.

2. The data-input device of claim 1,
wherein the data-input device further comprises one or more further receiving unit(s) for receiving electromagnetic-signals, worn on any of fingers 2-5;
and wherein the further receiving unit(s) are internal receiving units and/or external receiving units.

3. The data-input device of claim 2,
wherein external receiving units are configured to be placed by the volar and/or radial side of the proximal segments of the fingers;
and wherein external receiving units worn on a same finger are preferably two:
one configured to be worn by the volar side of the proximal segment of said finger, and the other one configured to be worn by the radial side of the proximal segment of said finger.

4. The data-input device of any of the prior claims,
wherein each internal receiving unit comprises:
- at least one inwards-oriented receiving electrode with electromagnetic-signals receiving plate(s) configured to be in direct contact with the human body tissue,
- at least one element with insulating properties to facilitate control of received electromagnetic signals,
- fixation means to fix and support the internal receiving unit and assure each internal receiving unit is removably attached to the hand or finger;
and wherein each external receiving unit comprises:
- at least one outwards-oriented receiving electrode with electromagnetic-signals receiving plate(s) configured not to be in direct contact with the supporting human body tissue of the hand,
- at least one element with insulating properties placed between the electrode plate(s) and the human body tissue to facilitate control of received electromagnetic signals and to avoid/mitigate direct flowing of electromagnetic signals between said external receiving unit and the said supporting human body tissue,
- fixation means to fix and support the internal receiving unit and assure each internal receiving unit is removably attached to the hand or finger.

5. The data-input device of any of the prior claims,
wherein when one or several transmitting units are worn on a same finger, said transmitting unit(s) are supported and attached to said finger by means of a single removable transmitting-set support; and/or
wherein when one or several receiving units are worn on a same finger, said receiving unit(s) are supported and attached to said finger by means of a single removable receiving-set support.

6. The data-input device of claim 5,
wherein transmitting-set supports of a finger's transmitting set present any of the following configurations, or combinations of them:
- a hood-like element configured to be worn on a finger fully/partially covering or wrapping its fingertip and/or other parts of its skin surface;
- a fully/partially circled ring-like element configured to be worn on the finger partially covering or occluding its skin surface, including a hood-like element attached to said ring-like element and configured to be worn on the tip of the finger fully/partially covering or wrapping its fingertip;
- an attachment mechanism or the like that allows easy engagement/disengagement with/from a small auxiliary component that is fixedly attached to the user's fingernail;
- an artificial nail complementing, extending or replacing the user's fingernail integrating the at least one transmitting unit;
- a partial implant of the at least one transmitting unit inside the human body tissue of the user's fingertip, leaving outwards-oriented electrodes of said transmitting unit(s) facing to the outside and sticking out of the skin.

7. The data-input device of any of the prior claims,
wherein at least one removable receiving set is worn on a finger and its receiving-set support presents a shape of a fully/partially-circled ring-like element configured to be worn on the proximal segments of a finger.

8. The data-input device of claim 7,
wherein the receiving-set support presents adjustment components/adaptations to allow fast, easy and precise rotational and/or translational adjusting of supported receiving units into their always-the-same optimal wearing/operating positions;

9. The data-input device of any of the prior claims,
wherein at least one removable receiving set is worn on an interdigital area and/or on one or two of its two adjacent fingers and its receiving-set support presents a shape that comprises a combination of a hook-like shape, configured to be worn on said interdigital area, and two partially circled ring-like shapes, configured to be worn on proximal segments of fingers adjacent to said interdigital area.

10. The data-input device of claim 9,
wherein the receiving-set support comprises a movable joint to allow articulated connection between two parts of the receiving-set support, the movable joint being configured to induce separation and/or avoid approximation of the two connected parts of the receiving-set support from each other whilst keeping them connected via the movable joint.

11. The data-input device of any of claims 7-10,
wherein at least one receiving set comprises a component that can detect contacts between said receiving set and a finger adjacent to fingers associated to said receiving set, or contacts between said receiving set and another receiving set worn on fingers adjacent to fingers associated to said receiving set, or contacts between parts of said receiving set that are worn on different fingers; and
wherein identification of receiving-set contacts by said receiving set is done by detecting simple contact between existing or auxiliary elements of the data-input device that are attached to a first and a second adjacent receiving-set supports and wherein said elements are configured to be placed facing each other, one by the ulnar side of a finger to which the first receiving-set is associated, and the other one by the radial side of the nearest adjacent finger to which the second receiving set is associated.

12. The data-input device of any of claims 7-11,
wherein receiving-set supports are joined to each other by means of bridging elements for facilitating handling of the receiving sets and/or reducing the complexity of signals/data connection units.

13. The data-input device of any of the prior claims,
further comprising a bracelet-type component that is worn on the wrist of the hand and is configured to facilitate permanent or temporary hosting of all or part of the components of the data-input device.

14. The data-input device of any of the prior claims,
wherein the at least one processing unit is adapted to identify, interpret and convert a majority of continuous-contact user-input gestures into continuous data-inputs by means of applying a set of transformation rules and conventions that convert, into alteration of variables used by the client device, certain continuous movements and/or pressures of transmitting units in contact with specific regions of the skin or nails of fingers 1-5 and/or other parts of the hand and/or elements of the data-input device;
and wherein the thumb-reachable volar and/or radial skin areas of 2 or more adjacent fingers of fingers 2-5 is a continuous-contact region of the data-input device allowing the user to introduce continuous bi-dimensional positional inputs within the screen of a client device; and
wherein the thumb-reachable volar and/or radial skin areas of 1 finger of fingers 2-5 is a continuous-contact region of the data-input device allowing the user to introduce continuous unidimensional inputs into a client device.

15. The data-input device of claim any of the prior claims,
wherein the data-input device further comprises:
- one or more further transmitting unit(s) for transmitting electromagnetic-signals, worn on any of fingers 2-5, and/or
- one or more further receiving unit(s) for receiving electromagnetic-signals, worn on finger 1.

16. The data-input device of any of the prior claims,
wherein when one or several internal receiving units are worn on a same finger, said internal receiving unit(s) are supported and attached to said finger by means of a non-removable receiving-set support configured as a full implant of said internal receiving unit(s) inside the human body tissue of the user's finger leaving said internal receiving unit(s) completely under the skin and in contact with the human body tissue.
